# EUROPÄISCHE PATENTSCHRIFT

(11) **EP 0 471 823 B1**
(45) Veröffentlichungstag und Bekanntmachung des Hinweises auf die Patenterteilung: **15.06.1994**
(21) Anmeldenummer: 91905957.6
(22) Anmeldetag: 12.03.1991
(51) Int. Cl.: B62D 25/16

(54) **VORRICHTUNG ZUR UNTERDRÜCKUNG DES SPRÜHNEBELAUSTRITTS IM RADBEREICH VON KRAFTFAHRZEUGEN, INSBESONDERE BEI LASTKRAFTWAGEN**
DEVICE FOR PREVENTING THE ESCAPE OF SPRAY FROM THE REGION OF THE WHEELS OF MOTOR VEHICLES, IN PARTICULAR LORRIES
DISPOSITIF EMPECHANT LA PROJECTION DE BROUILLARD DE FINES GOUTTELETTES DANS LA ZONE DES ROUES DE VEHICULES A MOTEUR, NOTAMMENT DE POIDS-LOURDS

(30) Priorität: 12.03.1990 DE 4007771
(43) Veröffentlichungstag der Anmeldung: 26.02.1992
(73) Patentinhaber: SCHMIDT, Alfred, D-79872 Bernau (DE)
(72) Erfinder: SCHMIDT, Alfred, D-79872 Bernau (DE)
(74) Vertreter: Grättinger, Günter
(86) Internationale Anmeldenummer: EP9100461
(87) Internationale Veröffentlichungsnummer: WO9113792

(56) Entgegenhaltungen:
- BG-A- 2 191 160
- CH-A- 104 454
- DE-C- 500 213
- FR-A- 396 797
- JP-A-59 192 675
- US-A- 445 700

## Beschreibung

Die Erfindung betrifft eine Vorrichtung zur Unterdrückung des Sprühnebelaustritts im Radbereich von Kraftfahrzeugen, insbesondere bei Lastkraftwagen mit einer einen Unterdruck im Radraum des jeweiligen Kotflügels erzeugenden Absaugeinrichtung, welche über eine Mehrzahl von Absaugöffnungen in der Kotflügelwand mit dem Radraum wenigstens eines Kotflügels verbunden ist.

In der Fachwelt hat man die Notwendigkeit von Maßnahmen zur Sprühnebelunterdrückung zur Verbesserung der Verkehrssicherheit bei Überholvorgängen längst erkannt. Dabei geht es darum, die auf nasser Straße durch die Fahrzeugreifen aufgewirbelten Wassertröpfchen daran zu hindern, daß sie sich im Luftstrom des Fahrzeugs als Sprühnebel ausbreiten. Besonders gefährlich für den nachfolgenden Verkehr ist dabei die Ausbreitung feinster Sprühnebeltröpfchen in seitlicher Richtung, wo es zu einer starken Sichtbehinderung kommt.

Eine Vorrichtung gemäß dem Oberbegriff von Anspruch 1 ist aus der GB-A-2 191 160 bekannt. Dabei ist oberhalb der Fahrzeugräder eine Radabdeckung vorgesehen, welche doppelwandig aufgebaut ist. In der unteren, den Fahrzeugrädern zugewandten Wand der Radabdeckung sind Löcher vorgesehen; der Raum zwischen den beiden Wänden wird von Luft durchströmt. Spritzwasser, welches von den Fahrzeugreifen abgeschleudert und vom Kotflügel aufgefangen wird, tritt durch die als Absaugöffnungen wirkendes Löcher hindurch in den Zwischenraum zwischen den Kotflügelwänden ein und wird von dem Luftstrom abtransportiert.

Eine weitere bekannte Vorrichtung (JP-A-59 192 675) umfaßt zur Unterdrückung des Austritts von Staub und Schmutz aus dem Radbereich eine hinter dem Rad angeordnete Absaugvorrichtung. Diese mit einem motorisch angetriebenen Sauggebläse arbeitende Vorrichtung verbessert zwar die üblichen Schmutzfänger; zur Absaugung von Sprühnebel ist sie jedoch weitgehend wirkungslos, weil sie den seitlichen Austritt der im Luftstrom verwirbelten Sprühnebeltröpfchen nicht verhindern kann.

Zur Absaugung von Staub, welcher durch Fahrzeugräder aufgewirbelt wird, ist ferner eine Vorrichtung bekannt (CH-A-104 454), welche hinter den Fahrzeugrädern angeordnete halbkreisförmige Staubsammler umfaßt, aus denen der aufgefangene Staub von einem Sauggebläse über je ein Absaugrohr abgesaugt wird.

Schließlich gibt es Kotflügel, welche entweder durch weitgehendes Umschließen des den Sprühnebel erzeugenden Rads oder durch geeignete Gestaltung, insbesondere des Innenprofils ein Auffangen zumindest eines Teils des die Sicht der nachfahrenden Fahrzeuge beeinträchtigenden Sprühnebels ermöglichen. Das Sprühnebelwasser wird dabei an Auffangflächen ausgeschieden, gesammelt und meist an der Innenseite des Kotflügels wieder auf den Boden geleitet.

Sämtliche bekannten Einrichtungen könne n jedoch die seitliche Ausbreitung des Sprühnebels kaum verhindern. Neben der damit verbundenen Sichtbehinderung ergibt sich als weiterer bislang zuwenig beachteter Nachteil, daß auf winterlichen Straßen durch das Besprühen von Anpflanzungen entlang dem Straßenrand erhebliche Kontaktschäden verursacht werden, weil die Sprühnebeltröpfchen im Winter meist einen hohen Salzgehalt aufgrund des auf die Fahrbahn aufgebrachten Streusalzes aufweisen. Die durch die Ausbreitung salzhaltiger Sprühnebeltröpfchen hervorgerufenen Bewuchsschäden können sich auf noch weit vom Fahrbandrand entfernte Gehölze erstrecken.

Demzufolge liegt der vorliegenden Erfindung die Aufgabe zugrunde, eine Vorrichtung zur Unterdrückung von Sprühnebel zu schaffen, welche wirksamer ist als die bekannten Lösungsvorschläge, und welche sich besonders einfach als Gesamtsystem für alle Kotflügel eines Fahrzeugs verwirklichen läßt.

Erfindungsgemäß wird diese Aufgabe dadurch gelöst, daß bei einer Vorrichtung gemäß dem Oberbegriff von Anspruch 1 die Absaugöffnungen zumindest in einer den Kotflügel zur Fahrzeugmitte hin abschließenden Innenwand angeordnet sind und daß die gelochte Innenwand des Kotflügels von einer Saughutze abgedeckt ist, an welche ein mit der Absaugeinrichtung verbundenes Absaugrohr angeschlossen ist.

Obwohl diese Lösung einen gewissen Aufwand an Leitungen und gegebenenfalls für ein Gebläse mit sich bringt, ist sie doch wegen ihrer ganz erheblich verbesserten Wirksamkeit gegenüber bekannten Vorrichtungen vorteilhaft. Da ihre Anwendung hauptsächlich für LKWs und Busse, also auf dem gewerblichen Sektor in Frage kommt, ist sie auch volkswirtschaftlich vertretbar. Zudem hält sich der Mehraufwand in Grenzen, insbesondere wenn die erforderlichen Installationen bereits bei der Montage der Nutzfahrzeuge durchgeführt werden und wenn als Leitungen einfach zu verlegende und billige Rohre aus Kunststoff oder gummiähnlichem Werkstoff verwendet werden.

Bei einer vorteilhaften Ausgestaltung der Erfindung wird der Unterdruck durch ein zweckmäßig im Heckbereich des Fahrzeugs vorgesehenes, hydraulisch, pneumatisch oder elektrisch angetriebenes Sauggebläse erzeugt.

Eine besonders vorteilhafte Ausgestaltung kommt erfindungsgemäß ohne Sauggebläse aus, indem die Saugwirkung nach dem Venturi-Prinzip erzeugt wird. Dabei umfaßt die Absaugeinrichtung eine Absaugleitung, welche eine zur Frontseite des Fahrzeugs hin offene Zulufthutze und eine mit dem Absaugort verbundene Einschnürung aufweist. Dabei ist es sinnvoll, für jede Fahrzeugseite eine gesonderte Absaugleitung vorzusehen; diese ist zweckmäßig entlang der Längsträger verlegt, entweder zwischen den Längsträgern des Fahrzeugchassis oder zwischen den Kotflügeln und dem Fahrzeugchassis.

Hinsichtlich des Anschlusses der erfindungsgemäßen Absaugeinrichtung am Kotflügel bzw. am Radraum sind zahlreiche Varianten denkbar. Auf besonders vorteilhafte Varianten beziehen sich die Unteransprüche 4 bis 7.

Im Rahmen der Erfindung können einzelne Absaugeinrichtungen, welche jeweils einem Rad bzw. Kotflügel zugeordnet sind, vorgesehen sein; es ist aber auch eine Zusammenfassung zu je einer Absaugeinrichtung auf jeder Seite eines LKWs denkbar, wobei wiederum beide Seiten getrennt an eine eigene Saugquelle angeschlossen oder über eine gemeinsame Saugquelle miteinander verbunden sein können. Eine besonders komplette kontruktive Lösung kann darin bestehen, zu beiden Seiten des LKW-Chassis über dessen gesamte Länge verlaufende Saugkanäle zu installieren, in welche die Radkästen integriert sind, so daß gesonderte Kotflügel entfallen.

Im folgenden wird die Erfindung anhand von Beispielen erläutert. Es zeigt
- Fig. 1: eine Draufsicht auf einen LKW mit einer Absaugeinrichtung nach dem Venturi-Prinzip,
- Fig. 2: eine Draufsicht auf einen LKW mit einem Sauggebläse als Absaugeinrichtung,
- Fig. 3: eine Seitenansicht des LKW gemäß Fig. 2 und
- Fig. 4: eine Draufsicht auf eine Variante zu Fig. 2.

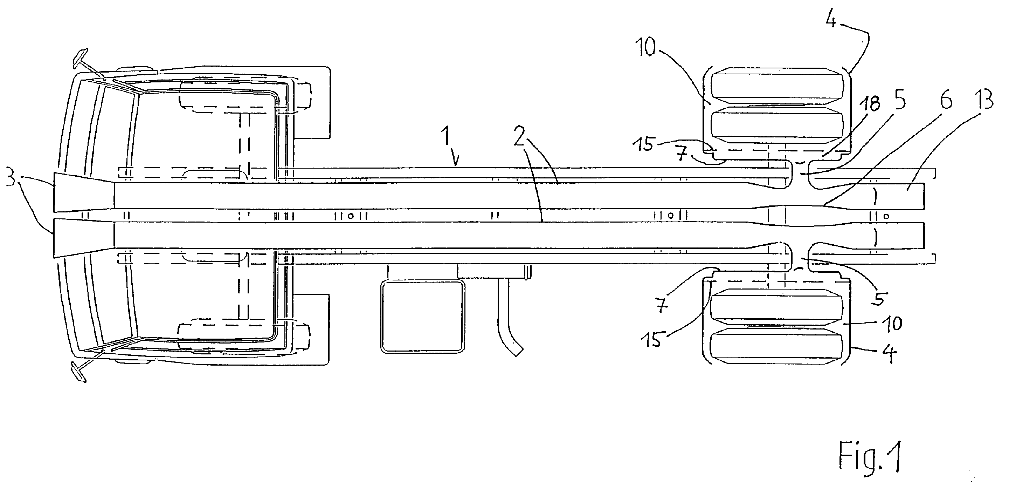

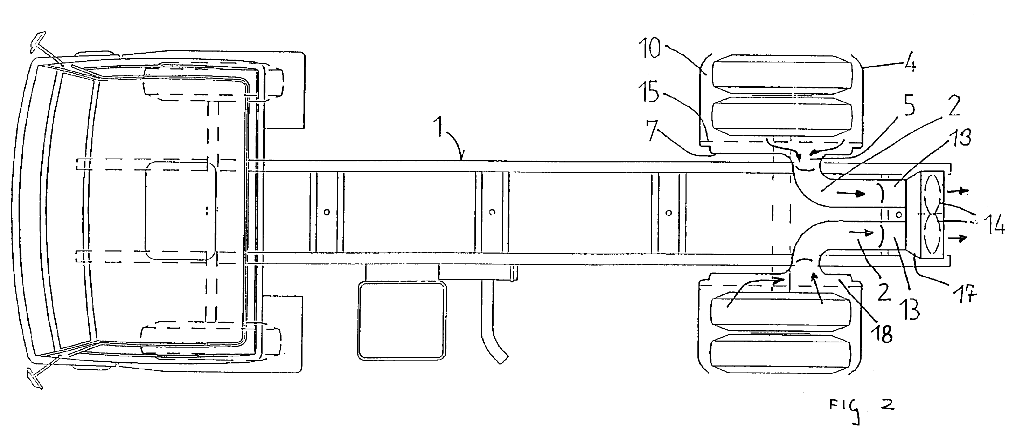

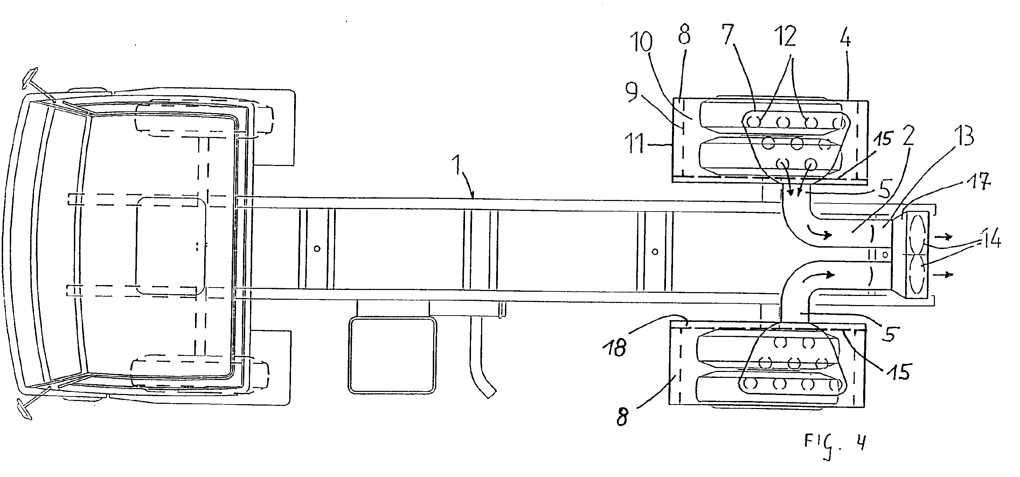

Das in Fig. 1 der Draufsicht schematisch dargestellte LKW-Chassis 1 zeigt eine Absaugeinrichtung nach dem Venturi-Prinzip, während die Fig. 2 eine Absaugeinrichtung mit einem Sauggebläse darstellt. Bei allen Absaugeinrichtungen ist jeweils ein axialer Anschluß des Absaugrohrs im Bereich einer zur Fahrzeugmitte hin weisenden Wand des Kotflügels vorgesehen; bei der Variante nach Fig. 4 ist zusätzlich eine radiale Absaugung des vom Kotflügel umschlossenen Radraums verwirklicht. Der Fachmann wird je nach Platzangebot oder sonstigen Umständen entweder die eine oder die andere Absaugeinrichtung wählen.

Bei der Absaugeinrichtung nach Fig. 1, welche nach dem Venturi-Prinzip arbeitet, ist eine Ansaugleitung 2 vorgesehen, die sich über die gesamte Fahrzeuglänge erstreckt. An der Frontseite des Fahrzeugs besitzt die Absaugleitung 2 eine Zulufthutze 3; im Bereich des am Kotflügel 4 angeschlossenen Absaugrohrs 5 besitzt die Absaugleitung 2 eine Verengung 6 zur Unterdruckerzeugung im Absaugrohr 5 und der daran angeschlossenen Saughutze 7. Die Absaugleitung 2 endet an ihrem hinteren Ende mit einem nach unten gebogenen Abluftkanal 13 mit offenem Austrittsquerschnitt.

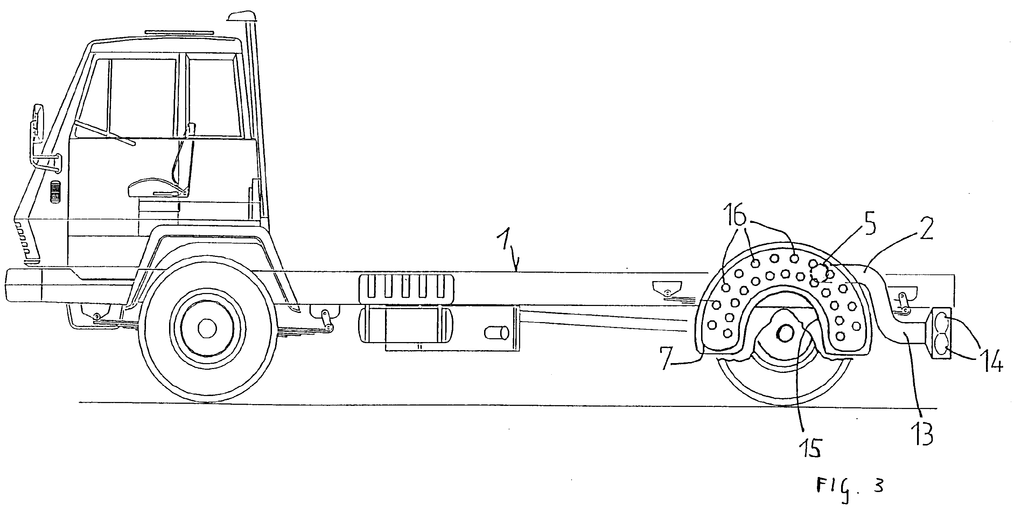

Gemäß Fig. 1 besitzt die dem Fahrzeug zugekehrte Innenwand 15 des Kotflügels 4 eine flach ausgebildete Saughutze 7, welche wie in Fig. 3 gezeigt, eine bogenförmige Form aufweist. Im Bereich der Saughutze 7 ist die Innenwand 15 gelocht, wobei die Löcher 16, wie in Fig. 3 dargestellt, einen verhältnismäßig großen Durchmesser aufweisen können. Durch den Sog in der Saughutze 7 und damit auch im Radraum 10 des Kotflügels 4, kann der im Radraum entstehende Sprühnebel wirksam, nämlich unmittelbar am Entstehungsort abgesaugt werden.

Gemäß Fig. 4 ist die Saughutze 7 an einen Kotflügel 4 angeschlossen, der einen als Hohlteil 8 ausgebildeten Umfangsteil aufweist. Die innere Schale 9 des Hohlteils 8 ist zum Radraum 10 hin gelocht; die äußere Schale 11 des Hohlteils 8 besitzt im Bereich der Saughutze 7 mehrere Öffnungen 12.

Gemäß den Fig. 2 bis 4 ist jeweils eine Absaugeinrichtung mit einem Gebläse 14 im Abluftkanal 13 vorgesehen. Die Absaugleitung 2 ist nur sehr kurz; sie reicht, wie in Fig. 3 dargestellt, bis zu dem nach unten gekrümmten Abluftkanal 13. Über ein ebenfalls kurzes Absaugrohr 5 und über die Saughutze 7 ist die Absaugleitung 2 an der gelochten Innenwand 15 des Kotflügels 4 angeschlossen. In einem gemeinsamen Gehäuse 17 sind zwei Sauggebläse 14 am Ende des Abluftkanals 13 untergebracht.

Zweckmäßig sind bei der Venturi-Ausführung gemäß Fig. 1 sowohl die frontseitige Zulufthutze 3 als auch der Abluftkanal 13 unterflur angeordnet sind. Im Absaugrohr 5 entsteht aufgrund der Engstelle 6 der Absaugleitung 2 nach dem Venturi-Prinzip ein Unterdruck, durch welchen über die Saughutze 7 der Hohlraum 18 des Kotflügels 4 abgesaugt wird.

Infolge der gelochten Ausbildung der Innenwand 15 des Hohlraums 18 baut sich ein Sog im Radraum 10 des Kotflügels 4 auf, durch welchen die dort vorhandenen Wassertröpfchen mit der Luft im Radraum 10 abgesaugt werden. Das abgesaugte Wasser kann dann auf der Rückseite des Fahrzeugs durch das offene Ende des Abluftkanals 13 wieder ausgeschieden werden. Es kann aber auch über einen an den Abluftkanal 13 angeschlossenen Wasserabscheider (nicht dargestellt) an einer anderen Stelle des Fahrzeugs gesammelt und von dort entleert werden.

## Patentansprüche

1. Vorrichtung zur Unterdrückung des Sprühnebelaustritts im Radbereich von Kraftfahrzeugen, insbesondere bei Lastkraftwagen, mit einer einen Unterdruck im Radraum (10) des jeweiligen Kotflügels (4) erzeugenden Absaugeinrichtung, welche über eine Mehrzahl von Absaugöffnungen in der Kotflügelwand mit dem Radraum (10) wenigstens eines Kotflügels (4) verbunden ist,
dadurch gekennzeichnet,
daß die Absaugöffnungen zumindest in einer den Kotflügel (4) zur Fahrzeugmitte hin abschließenden Innenwand (15) angeordnet sind und daß die gelochte Innenwand (15) des Kotflügels (4) von einer Saughutze (7) abgedeckt ist, an welche ein mit der Absaugeinrichtung verbundenes Absaugrohr (5) angeschlossen ist.

2. Vorrichtung nach Anspruch 1,
dadurch gekennzeichnet,
daß die Absaugeinrichtung ein Sauggebläse (14) umfaßt.

3. Vorrichtung nach Anspruch 1,
dadurch gekennzeichnet,
daß die Absaugeinrichtung eine Absaugleitung (2) umfaßt, welche eine zur Frontseite des Fahrzeugs hin offene Zulufthutze (3) und eine mit dem Absaugort verbundene Einschnürung (6) aufweist.

4. Vorrichtung nach Anspruch 1,
gekennzeichnet durch zusätzliche Absaugöffnungen im Umfangsteil des Kotflügels.

5. Vorrichtung nach Anspruch 4,
dadurch gekennzeichnet,
daß im Umfangsteil des Kotflügels (4) Durchbrechungen als Ansaugöffnungen zu einer an der Kotflügelaußenseite angeschlossenen, mit der Absaugleitung verbundenen Saughutze (7) vorgesehen sind.

6. Vorrichtung nach Anspruch 4,
dadurch gekennzeichnet,
daß der Umfangsteil des Kotflügels (4) ein mit einem Querschnitt etwa von der Breite des Kotflügels (4) und geringer Höhe ausgebildeter Hohlteil (8) ist, welcher einerseits mit dem Absaugrohr (5) verbunden ist und welcher andererseits Öffnungen (12) zum Radraum (10) des Kotflügels (4) aufweist.

## Claims

1. Apparatus for preventing the escape of spray-mist from the wheel area of motor vehicles, in particular of lorries, with an exhaust suction apparatus creating underpressure in the wheel space (10) of each of the respective fenders (4), said exhaust suction apparatus being connected via numerous suction intake openings in the fender wall to the wheel space (10) of at least one of the fenders (4),
characterized in that
the suction intake openings are positioned on at least one inner wall (15) closing the fender (4) towards the vehicle center, and that the perforated inner wall (15) of the fender (4) is covered with a suction hood (7) to which an exhaust suction tube (5) is attached, said tube being connected with the exhaust suction apparatus.

2. Apparatus in accordance with claim 1,
characterized in that
the exhaust apparatus contains a suction fan (14).

3. Apparatus in accordance with claim 1
characterized in that
the exhaust apparatus contains an exhaust suction conduit (2) which comprises an air intake hood (3) opening towards the front side of the vehicle and a constriction (6) connected with the exhaust suction origin point.

4. Apparatus in accordance with claim 1,
characterized through additional exhaust suction openings in the circumference part of the fender.

5. Apparatus in accordance with claim 4,
characterized in that
the circumference part of the fender (4) perforations are provided as intake suction openings leading to the suction hood (7) which is connected to the outer side of the fender and attached to the exhaust suction conduit.

6. Apparatus in accordance with claim 4,
characterized in that
the circumference part of the fender (4) is a hollow part (8) with a cross-section of approximately the width of the fender (4) and little height, which on one side is connected to the exhaust suction tube (5) and on the other side comprises openings (12) towards the wheel space (10) of the fender (4).

## Revendications

1. Dispositif pour supprimer la projection d'un brouillard de fines gouttelettes pulvérisées au voisinage des roues de véhicules automobiles, notamment de poids lourds, comportant un dispositif d'aspiration, qui produit une dépression dans le passage de roue (10) de l'aile respective (4) et qui est raccordé, par l'intermédiaire d'une multiplicité d'ouvertures d'aspiration ménagées dans la paroi de l'aile, au passage de roue (10) d'au moins une aile (4), caractérisé en ce que les ouvertures d'aspiration sont disposées au moins dans une paroi intérieure (15) qui termine l'aile (4) en direction du centre du véhicule, et que la paroi intérieure perforée (15) de l'aile (4) est recouverte par une hotte aspirante (7), à laquelle est raccordée un tube d'aspiration (5) relié au dispositif d'aspiration.

2. Dispositif selon la revendication 1, caractérisé en ce que le dispositif d'aspiration comprend un ventilateur aspirant (14).

3. Dispositif selon la revendication 1, caractérisé en ce que le dispositif d'aspiration comprend une canalisation d'aspiration (2), qui possède une hotte d'amenée d'air (3) ouverte en direction de la face avant du véhicule, et une partie rétrécie (6) reliée au point d'aspiration.

4. Dispositif selon la revendication 1, caractérisé par des ouvertures d'aspiration supplémentaire ménagées dans la partie circonférentielle de l'aile.

5. Dispositif selon la revendication 4, caractérisé en ce que dans la partie circonférentielle de l'aile (4) il est prévu des passages en tant qu'ouvertures d'aspiration aboutissant à une hotte aspirante (7), qui est raccordée au côté extérieur de l'aile et est reliée à la conduite d'aspiration.

6. Dispositif selon la revendication 4, caractérisé en ce que la partie circonférentielle de l'aile (4) est une cavité (8), réalisée avec une section transversale correspondant approximativement à la largeur de l'aile (4) possédant une faible hauteur et qui d'une part est reliée au tube d'aspiration (5) et d'autre part possède des ouvertures (12) aboutissant au passage de roue (10) de l'aile (4).
